# EUROPÄISCHE PATENTSCHRIFT

(11) **EP 4 548 416 B1**
(45) Veröffentlichungstag und Bekanntmachung des Hinweises auf die Patenterteilung: **11.11.2026**
(21) Anmeldenummer: 23736294.2
(22) Anmeldetag: 28.06.2023
(51) Int. Cl.: H01M 8/04089, H01M 8/04111, H01M 8/04119, H01M 8/04225

(54) **BRENNSTOFFZELLENSYSTEM UND BETRIEBSVERFAHREN**
FUEL CELL SYSTEM AND OPERATING METHOD
SYSTÈME DE PILE À COMBUSTIBLE ET PROCÉDÉ DE FONCTIONNEMENT

(30) Priorität: 30.06.2022 DE 102022206676
(43) Veröffentlichungstag der Anmeldung: 07.05.2025
(73) Patentinhaber: MAHLE International GmbH, 70376 Stuttgart (DE)
(72) Erfinder: Auer, Markus, 70435 Stuttgart (DE)
(86) Internationale Anmeldenummer: PCT/EP2023/067704
(87) Internationale Veröffentlichungsnummer: WO 2024/003169

(56) Entgegenhaltungen:
- CN-A- 112 421 075
- DE-A1- 102014 221 321
- US-A1- 2021 104 759

## Beschreibung

Die vorliegende Erfindung betrifft ein Brennstoffzellensystem und ein Verfahren zum Betreiben eines solchen Brennstoffzellensystems.

Der Einsatz von Brennstoffzellen in Kraftfahrzeugen ist bekannt und nimmt an Bedeutung zu. Ein Brennstoffzellensystem wird üblicherweise durch mehrere aufeinandergestapelte Brennstoffzellen gebildet. Ein solcher Stapel aus Brennstoffzellen wird oftmals auch als "Stack" bezeichnet. Die einzelnen Brennstoffzellen erzeugen im Betrieb ein wasserhaltiges Abgas, welches mittels einer Abgasanlage vom Stack abtransportiert wird. Im Abgasstrang der Abgasanlage ist typischerweise eine Expansionsmaschine angeordnet, welche von dem Abgas angetrieben werden kann und auf diese Weise mechanische Arbeit verrichtet. Brennstoffzellensysteme mit Expansionsmaschinen sind aus den Dokumenten US2021/104759, DE10214221321 und CN112421075 bekannt.

Um eine Beschädigung der Expansionsmaschine durch das im Abgas enthaltene Wasser zu verhindern, ist es üblich, im Abgasstrang stromauf der Expansionsmaschine einen Wasserabscheider anzuordnen. Dieser muss so ausgelegt werden, dass er auch beim Kaltstart des Brennstoffzellensystems, bei welchem besonders viel Wasser erzeugt wird, dieses aus dem Abgas entfernen kann. Ein derart ausgelegter Wasserabscheider erzeugt jedoch nicht nur beim Kaltstart, sondern auch im Normalbetrieb des Brennstoffzellensystems im Abgasstrang einen relativ hohen Druckabfall, welcher den Verbrauch des Brennstoffzellensystems erhöht und somit dessen Wirkungsgrad mindert.

Es ist daher eine Aufgabe der vorliegenden Erfindung, eine verbesserte Ausführungsform für ein Brennstoffzellensystem zu schaffen, in welcher voranstehend erläuterte Problematik adressiert ist.

Diese Aufgabe wird durch den Gegenstand der unabhängigen Patentansprüche gelöst. Bevorzugte Ausführungsformen sind Gegenstand der abhängigen Patentansprüche.

Grundidee der Erfindung ist demnach, die Abgasanlage eines Brennstoffzellensystems mit einem Bypass auszustatten, mittels welchem das Abgas - insbesondere während des eingangs erwähnten Kaltstarts des Brennstoffzellensystems - an der Expansionsmaschine vorbeigeleitetet werden kann, so dass keine Beschädigung der Expansionsmaschine durch im Abgas vorhandenes Wasser droht. Besagter Bypass zweigt dabei nicht nur stromauf der Expansionsmaschine, sondern auch stromauf des Wasserabscheiders vom Abgasstrang ab. Somit kann der Wasserabscheider entsprechend leistungsschwächer ausgelegt werden, weil er nur im Nominalbetrieb Wasser aus dem Abgas abscheiden muss, nicht aber während des Kaltstarts. Mit einer solchen Auslegung des Wasserabscheiders gehen aber in vorteilhafter Weise geringere Druckverluste einhergehen, was wiederum zu einer verbesserten Effizienz des Brennstoffzellensystems führt.

Zur Steuerung des Bypasses und somit der Menge an der Expansionsmaschine vorbeizuführendem Abgas ist sowohl im eigentlichen Abgasstrang als auch im Bypass jeweils ein Ventil vorgesehen, mittels welchen eingestellt werden kann, welcher Anteil an Abgas der Expansionsmaschine zugeführt werden soll und welcher Anteil - mittels des Bypasses - an der Expansionsmaschine vorbeigeführt werden soll. Dieses Verhältnis kann im Betrieb des Brennstoffzellensystems individuellen Betriebssituationen angepasst werden. Dies gilt insbesondere für den Kaltstart des Brennstoffzellensystems, bei welchem es durch Schließen des der Expansionsmaschine zugeordneten Ventils möglich ist, das Abgas vorübergehend vollständig über den Bypass an der Expansionsmaschine vorbeizuführen.

Sowohl die Ventileinrichtung als auch die Bypass-Ventileinrichtung können in herkömmlicher Weise ausgestaltet sein, was bedeutet, dass diese eine im Gaspfad bzw. im Bypass-Gaspfad vorgesehene Ventilöffnung umfasst, die von einem Ventilsitz eingefasst ist. Weiterhin umfasst die Ventileinrichtung bzw. Bypass-Ventileinrichtung einen verstellbaren Ventilkörper, der in einer Schließstellung am Ventilsitz anliegt und die Ventilöffnung fluiddicht verschließt, sodass kein Abgas durch die Ventilöffnung strömen kann. In einer von der Schließstellung verschiedenen Offenstellung ist hingegen die Ventilöffnung zum Durchströmen mit dem Abgas freigegeben. Weiterhin kann die Ventileinrichtung bzw. Bypass-Ventileinrichtung so ausgelegt sein, dass der Ventilkörper in Zwischenstellungen zwischen der offenen Stellung und der Schließstellung verstellt werden kann. Insbesondere kann dabei der zum Durchströmen mit Abgas freigegeben Öffnungsquerschnitt der Ventilöffnung mit durch Bewegung des Ventilkörpers von der Schließstellung zur Offenstellung hin vergrößert werden. Auf diese Weise kann eine Öffnungsgrad der Ventileinrichtung bzw. der Bypass-Ventileinrichtung variiert werden.

Im Einzelnen umfasst ein erfindungsgemäßes Brennstoffzellensystem eine Expansionsmaschine zum Verrichten von mechanischer Arbeit, die eine Hochdruckseite und eine Niederdruckseite aufweist. Ferner umfasst das Brennstoffzellensystem mehrere, also wenigstens zwei, aufeinandergestapelte Brennstoffzellen. Diese Brennstoffzellen kommunizieren über einen Gaspfad fluidisch mit der Hochdruckseite der Expansionsmaschine, so dass im Betrieb des Brennstoffzellensystems aus den Brennstoffzellen in den Gaspfad ausgestoßenes und beim Ausstoß Wasser enthaltendes Abgas die Expansionsmaschine antreibt. Der Gaspfad kann Teil einer Abgasanlage bzw. eines Abgasstrangs des Brennstoffzellensystems sein.

Weiterhin umfasst das Brennstoffzellensystem einen im Gaspfad angeordneten Wasserabscheider zum Abscheiden von Wasser aus dem Abgas. Zwischen dem Wasserabscheider und der Hochdruckseite der Expansionsmaschine ist eine Ventileinrichtung des Brennstoffzellensystems zum Einstellen einer der Expansionsmaschine zuzuführenden Menge an Abgas angeordnet.

Erfindungsgemäß umfasst das Brennstoffzellensystem außerdem einen von dem Abgas durchströmbaren Bypass-Gaspfad. Dieser Bypass-Gaspfad zweigt zwischen den Brennstoffzellen und dem Wasserabscheider vom Gaspfad ab, so dass über den Bypass-Gaspfad Abgas an der Expansionsmaschine vorbeigeführt werden kann. Der Bypass-Gaspfad kann stromab der Expansionsmaschine wieder in den Gaspfad münden. Im Bypass-Gaspfad ist eine Bypass-Ventileinrichtung des Brennstoffzellensystems zum Einstellen der Menge an durch den Bypass-Gaspfad strömenden Abgas angeordnet.

Zweckmäßig kann die Expansionsmaschine eine Gasturbine sein. Bevorzugt umfasst die Expansionsmaschine bzw. die Gasturbine ein drehbares und von dem Abgas antreibbares Turbinenrad.

Besonders bevorzugt kann die im Gaspfad angeordnete Ventileinrichtung ein Druckregelventil zum Regeln des Gasdrucks des Abgases sein oder umfassen. Insbesondere kann das Druckregelventil so konfiguriert sein, dass durch entsprechende Einstellung des Druckregelventils der Druck in der Kathode der Brennstoffzellen auf einen bestimmten Sollwert geregelt wird.

Ebenfalls besonders bevorzugt kann die im Bypass-Gaspfad angeordnete Bypass-Ventileinrichtung ein Druckregelventil sein oder umfassen. Auch dieses Druckregelventil kann so konfiguriert sein, dass durch entsprechende Einstellung des Druckregelventils der Druck in der Kathode der Brennstoffzellen auf einen bestimmten Sollwert geregelt wird.

Besonders zweckmäßig können die Ventileinrichtung und die Bypass-Ventileinrichtung als Gleichteile ausgebildet sein. Diese Eigenschaft vereinfacht den Aufbau des Brennstoffzellensystems und führt somit zu Kostenvorteilen bei der Herstellung des Brennstoffzellensystems.

Gemäß einer vorteilhaften Weiterbildung umfasst das Brennstoffzellensystem eine Steuerungs-/Regelungseinrichtung, mittels welcher die Ventileinrichtung und die Bypass-Ventileinrichtung jeweils zwischen einer Offenstellung, in welcher die Ventileinrichtung von dem Abgas durchströmbar ist, und einer Schließstellung, in welcher die Durchströmung mit dem Abgas unterbunden ist, verstellt werden können. Mittels einer derart konfigurierten Steuerungs-/Regelungseinrichtung kann die Stellung der Ventileinrichtung an unterschiedliche Betriebssituationen angepasst werden. Dadurch kann festgelegt werden, welcher Anteil des aus von den Brennstoffzellen kommenden Abgases der Expansionsmaschine zugeführt wird und welcher Anteil an der Expansionsmaschine vorbeigeleitet wird. Insbesondere ist es möglich, das Brennstoffzellensystem in verschiedenen Betriebszuständen zu betreiben. Insbesondere kann auf diese Weise berücksichtigt werden, dass beim Kaltstart der Brennstoffzellen im Abgas besonders viel Wasser enthalten ist, welches somit zum Schutz der Expansionsmaschine über den Bypass an der Expansionsmaschine vorbeigeführt werden kann.

Bei einer weiteren bevorzugten Ausführungsform ist das erfindungsgemäße Brennstoffzellensystem mittels der Steuerungs-/Regelungseinrichtung zwischen einem Nominal-Betriebszustand und einem Kaltstart-Betriebszustand umschaltbar. Bei dieser Ausführungsform ist die Ventileinrichtung im Nominal-Betriebszustand nicht in die Schließstellung verstellt. Dies bedeutet, dass die Ventileinrichtung in die Offenstellung oder in eine Zwischenstellung zwischen der Schließstellung und der Offenstellung verstellt ist. Somit kann in jedem Fall eine bestimmte Menge an Abgas in die Expansionsmaschine gelangen und diese antreiben, wobei der Wasserabscheider in der Lage ist, dass im Abgas enthaltene Wasser zu separieren, sodass dieses nicht in die Expansionsmaschine gelangen kann. Im Kaltstart-Betriebszustand ist die Bypass-Ventileinrichtung nicht in die Schließstellung verstellt. Somit wird zumindest ein Teil des Abgases an der Expansionsmaschine vorbeigeführt. Auf diese Weise wird verhindert, dass aufgrund der erhöhten Menge an Wasser im Abgas der Wasserabscheider überlastet wird.

Gemäß einer vorteilhaften Weiterbildung ist im Kaltstart-Betriebszustand die Ventileinrichtung in die Schließstellung verstellt. Auf diese Weise wird die Expansionsmaschine beim Kaltstart bestmöglichst gegen Beschädigung durch Wasser geschützt.

Gemäß einer weiteren vorteilhaften Weiterbildung wird im Nominal-Betriebszustand die Bypass-Ventileinrichtung in die Schließstellung verstellt. Dadurch wird das gesamte Abgas der Expansionsmaschine zugeführt und somit der Wirkungsgrad Brennstoffzellensystem maximiert.

Die Erfindung betrifft ferner ein Kraftfahrzeug mit einem voranstehend vorgestellten, erfindungsgemäßen Brennstoffzellensystem, sodass sich die Vorteile des erfindungsgemäßen Brennstoffzellensystem auf das erfindungsgemäße Kraftfahrzeug übertragen.

Die Erfindung betrifft ferner ein Verfahren zum Betreiben eines voranstehend vorgestellten Brennstoffzellensystems mit Steuerungs-/Regelungseinrichtung, sodass sich die Vorteile des erfindungsgemäßen Brennstoffzellensystem auch auf das erfindungsgemäße Verfahren übertragen. Gemäß dem Verfahren wird das Brennstoffzellensystem nach seiner Inbetriebnahme, also nach dem Einschalten, zunächst in den Kaltstart-Betriebszustand geschaltet und in diesem Kaltstart-Betriebszustand betrieben und zu einem späteren Zeitpunkt vom Kaltstart-Betriebszustand in den Nominal-Betriebszustand umgeschaltet.

Weitere wichtige Merkmale und Vorteile der Erfindung ergeben sich aus den Unteransprüchen, aus der Zeichnung und aus der zugehörigen Figurenbeschreibung anhand der Zeichnung.

Bevorzugte Ausführungsbeispiele der Erfindung sind in der Zeichnung dargestellt und werden in der nachfolgenden Beschreibung näher erläutert, wobei sich gleiche Bezugszeichen auf gleiche oder ähnliche oder funktional gleiche Komponenten beziehen.

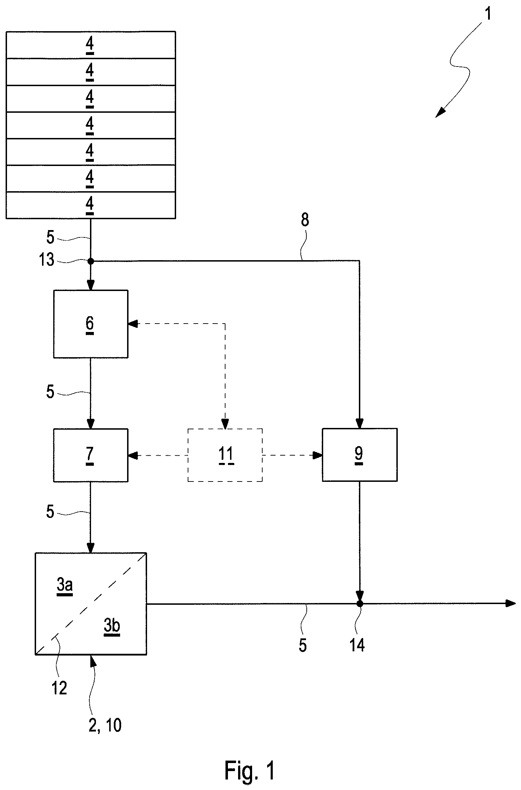

Die einzige Figur 1 zeigt in schematischer Darstellung ein Beispiel eines erfindungsgemäßen Brennstoffzellensystems 1. Dieses umfasst eine Expansionsmaschine 2 zum Verrichten von mechanischer Arbeit, die eine Hochdruckseite 3a und eine Niederdruckseite 3b aufweist. Im Beispielszenario ist die Expansionsmaschine 2 eine Gasturbine 10. Die Expansionsmaschine 2 bzw. die Gasturbine 10 kann ein drehbares und von dem Abgas antreibbaren Turbinenrad (nicht gezeigt, in Figur 1 durch eine gestrichelte Linie 12 angedeutet) umfassen, welches die Expansionsmaschine 2 bzw. die Gasturbine 10 in die Hochdruckseite 3a und die Niederdruckseite 3b unterteilt.

Das Brennstoffzellensystem 1 umfasst ferner mehrere aufeinandergestapelte Brennstoffzellen 4, welche über einen Gaspfad 5 fluidisch mit der Hochdruckseite 3a der Expansionsmaschine 2 kommunizieren. Somit kann so dass im Betrieb des Brennstoffzellensystems 1 aus den Brennstoffzellen 4 in den Gaspfad 5 ausgestoßenes Abgas die Expansionsmaschine 2 antreiben. Im Abgas ist Wasser enthalten. Daher ist im Gaspfad 5 ein Wasserabscheider 6 zum Abscheiden des Wassers aus dem Abgas, bevor dieses die Expansionsmaschine 2 erreicht, vorgesehen. Ferner umfasst das Brennstoffzellensystem 1 einen von dem Abgas durchströmbaren Bypass-Gaspfad 8, der zwischen den Brennstoffzellen 4 und dem Wasserabscheider 6 in einem Abzweigpunkt 13 vom Gaspfad 5 abzweigt, an der Expansionsmaschine 2 vorbeiführt und stromab der Expansionsmaschine 2 in einem Mündungspunkt 14 wieder in den Gaspfad 5 mündet. Über den Bypass-Gaspfad 8 kann also Abgas an der Expansionsmaschine 2 vorbeigeführt werden. Zwischen dem Wasserabscheider 6 und der Hochdruckseite 3a der Expansionsmaschine 2 ist im Gaspfad 5 eine Ventileinrichtung 7 zum Einstellen einer der Expansionsmaschine 2 zuzuführenden Menge an Abgas angeordnet. In analoger Weise ist im Bypass-Gaspfad 8 eine Bypass-Ventileinrichtung 9 zum Einstellen der Menge an durch den Bypass-Gaspfad 8 strömenden und somit an der Expansionsmaschine 2 vorbeizuführendem Abgas angeordnet.

Die im Gaspfad 5 angeordnete Ventileinrichtung 7 ist durch ein Druckregelventil gebildet. Ebenso kann die im Bypass-Gaspfad 8 angeordnete Bypass-Ventileinrichtung 9 durch ein Druckregelventil gebildet sein. Die Ventileinrichtung 7 und die Bypass-Ventileinrichtung 9 bzw. die beiden Druckregelventile können als Gleichteile ausgebildet sein.

Das Brennstoffzellensystem 1 umfasst weiterhin eine Steuerungs-/Regelungseinrichtung 11. Mittels der Steuerungs-/Regelungseinrichtung 11 sind sowohl die im Gaspfad 5 angeordnete Ventileinrichtung 7 als auch die im Bypass-Gaspfad 8 angeordnete Bypass-Ventileinrichtung 9 zwischen einer Offenstellung und einer Schließstellung verstellbar. In der Offenstellung ist die Ventileinrichtung 7 bzw. die Bypass-Ventileinrichtung 9 von dem Abgas durchströmbar. In der Schließstellung hingegen ist die Durchströmung der Ventileinrichtung 7 bzw. der Bypass-Ventileinrichtung 9 mit dem Abgas unterbunden. Die Ventileinrichtung 7 sowie die Bypass-Ventileinrichtung 9 sind jeweils auch in Zwischenstellungen zwischen der Offenstellung und der Schließstellung verstellbar.

Das Brennstoffzellensystem 1 kann mittels der Steuerungs-/Regelungseinrichtung 11 umschaltbar ist zwischen einem Nominal-Betriebszustand und einem Kaltstart-Betriebszustand umgeschaltet werden. Im Kaltstart-Betriebszustand die Ventileinrichtung 7 in die Schließstellung verstellt ist, im Nominal-Betriebszustand in eine von der Schließstellung verschiedene Stellung. Diese von der Schließstellung verschiedene Stellung kann die Offenstellung sein. Im Nominal-Betriebszustand ist die Bypass-Ventileinrichtung 9 in die Schließstellung verstellt, im Kaltstart-Betriebszustand in eine von der Schließstellung verschiedene Stellung. Diese von der Schließstellung verschiedene Stellung kann die Offenstellung sein.

In dem voranstehend beispielhaft erläuterten Brennstoffzellensystem 1 kann des erfindungsgemäßen Verfahren ausgeführt werden. Gemäß dem Verfahren wird das Brennstoffzellensystem 1nach seiner Inbetriebnahme, also nach dem Einschalten, zunächst in den Kaltstart-Betriebszustand geschaltet und in diesem Kaltstart-Betriebszustand betrieben und zu einem späteren Zeitpunkt vom Kaltstart-Betriebszustand in den Nominal-Betriebszustand umgeschaltet.

## Patentansprüche

1. Brennstoffzellensystem (1) für ein Kraftfahrzeug,
- mit einer eine Hochdruckseite (3a) und eine Niederdruckseite (3b) aufweisenden Expansionsmaschine (2) zum Verrichten von mechanischer Arbeit,
- mit einer mehreren aufeinandergestapelten Brennstoffzellen (4), welche über einen Gaspfad (5) fluidisch mit der Hochdruckseite der Expansionsmaschine (2) kommunizieren, so dass im Betrieb des Brennstoffzellensystems (1) aus den Brennstoffzellen (4) in den Gaspfad (5) ausgestoßenes, Wasser enthaltendes Abgas die Expansionsmaschine (2) antreibt,
- mit einem im Gaspfad (5) angeordneten Wasserabscheider (6) zum Abscheiden von Wasser aus dem Abgas,
- mit einer zwischen dem Wasserabscheider (6) und der Hochdruckseite (3a) der Expansionsmaschine (2) angeordneten Ventileinrichtung (7) zum Einstellen einer der Expansionsmaschine (2) zuzuführenden Menge an Abgas,
- mit einem von dem Abgas durchströmbaren Bypass-Gaspfad (8), der zwischen den Brennstoffzellen (4) und dem Wasserabscheider (6) vom Gaspfad (5) abzweigt und mittels welchem Abgas an der Expansionsmaschine (2) vorbeigeführt werden kann,
- mit einer im Bypass-Gaspfad (8) angeordneten Bypass-Ventileinrichtung (9) zum Einstellen der Menge an durch den Bypass-Gaspfad (8) strömenden Abgas.

2. Brennstoffzellensystem nach Anspruch 1,
**dadurch gekennzeichnet, dass**
die Expansionsmaschine (2) eine Gasturbine (10) ist.

3. Brennstoffzellensystem nach Anspruch 1 oder 2,
**dadurch gekennzeichnet, dass**
die im Gaspfad (5) angeordnete Ventileinrichtung (7) ein Druckregelventil ist oder umfasst.

4. Brennstoffzellensystem nach einem der Ansprüche 1 bis 3,
**dadurch gekennzeichnet, dass**
die im Bypass-Gaspfad (8) angeordnete Bypass-Ventileinrichtung (9) ein Druckregelventil ist oder umfasst.

5. Brennstoffzellensystem nach einem der vorhergehenden Ansprüche,
**dadurch gekennzeichnet, dass**
die Ventileinrichtung (7) und die Bypass-Ventileinrichtung (9) als Gleichteile ausgebildet sind.

6. Brennstoffzellensystem nach einem der vorhergehenden Ansprüche,
**dadurch gekennzeichnet, dass**
das Brennstoffzellensystem (1) eine Steuerungs-/Regelungseinrichtung (11) umfasst, mittels welcher die Ventileinrichtung (7) und die Bypass-Ventileinrichtung (9) jeweils verstellbar sind zwischen einer Offenstellung, in welcher die Ventileinrichtung von dem Abgas durchströmbar ist, und einer Schließstellung, in welcher die Durchströmung mit dem Abgas unterbunden ist.

7. Brennstoffzellensystem nach Anspruch 6,
**dadurch gekennzeichnet, dass**
- das Brennstoffzellensystem (1) mittels der Steuerungs-/Regelungseinrichtung (11) umschaltbar ist zwischen einem Nominal-Betriebszustand und einem Kaltstart-Betriebszustand,
- wobei im Nominal-Betriebszustand die Ventileinrichtung (7) nicht in den Schließstellung verstellt ist und im Kaltstart-Betriebszustand die Bypass-Ventileinrichtung (9) nicht in den Schließzustand verstellt ist.

8. Brennstoffzellensystem nach Anspruch 7,
**dadurch gekennzeichnet, dass**
im Kaltstart-Betriebszustand die Ventileinrichtung (7) in die Schließstellung verstellt ist.

9. Brennstoffzellensystem nach Anspruch 7 oder 8,
**dadurch gekennzeichnet, dass**
im Kaltstart-Betriebszustand die Bypass-Ventileinrichtung (7) nicht in die Schließstellung verstellt ist.

10. Brennstoffzellensystem nach einem der Ansprüche 7 bis 9,
**dadurch gekennzeichnet, dass**
im Nominal-Betriebszustand die Bypass-Ventileinrichtung (7) in die Schließstellung verstellt ist.

11. Kraftfahrzeug mit einem Brennstoffzellensystem nach einem der vorhergehenden Ansprüche.

12. Verfahren zum Betreiben eins Brennstoffzellensystems nach einem der Ansprüche 7 bis 10,
gemäß welchem das Brennstoffzellensystem nach Inbetriebnahme in den Kaltstart-Betriebszustand geschaltet wird und zu einem späteren Zeitpunkt vom Kaltstart-Betriebszustand in den Nominal-Betriebszustand umgeschaltet wird.

## Claims

1. Fuel cell system (1) for a motor vehicle,
- comprising an expansion machine (2) for performing mechanical work, said expansion machine having a high-pressure side (3a) and a low-pressure side (3b),
- comprising a plurality of fuel cells (4) which are stacked one on top of the other and communicate fluidically with the high-pressure side of the expansion machine (2) via a gas path (5) such that during operation of the fuel cell system (1), water-containing exhaust gas expelled from the fuel cells (4) into the gas path (5) drives the expansion machine (2),
- comprising a water separator (6) for separating water from the exhaust gas, said water separator being arranged in the gas path (5),
- comprising a valve device (7) for adjusting the amount of exhaust gas to be supplied to the expansion machine (2), said valve device being arranged between the water separator (6) and the high-pressure side (3a) of the expansion machine (2),
- comprising a bypass gas path (8) through which the exhaust gas can flow, which between the fuel cells (4) and the water separator (6) branches off from the gas path (5), and by means of which exhaust gas can be guided so as to bypass the expansion machine (2),
- comprising a bypass valve device (9) for adjusting the amount of exhaust gas flowing through the bypass gas path (8), said bypass valve device being arranged in the bypass gas path (8).

2. Fuel cell system according to claim 1,
**characterized in that**
the expansion machine (2) is a gas turbine (10).

3. Fuel cell system according to claim 1 or 2,
**characterized in that**
the valve device (7) arranged in the gas path (5) is or comprises a pressure regulating valve.

4. Fuel cell system according to any of claims 1 to 3,
**characterized in that**
the bypass valve device (9) arranged in the bypass gas path (8) is or comprises a pressure regulating valve.

5. Fuel cell system according to any of the preceding claims,
**characterized in that**
the valve device (7) and the bypass valve device (9) are formed as identical parts.

6. Fuel cell system according to any of the preceding claims,
**characterized in that**
the fuel cell system (1) comprises an open-loop and/or closed-loop control device (11) by means of which the valve device (7) and the bypass valve device (9) can each be moved between an open position, in which the exhaust gas can flow through the valve device, and a closed position, in which the exhaust gas is prevented from flowing therethrough.

7. Fuel cell system according to claim 6,
**characterized in that**
- the fuel cell system (1) can be switched between a nominal operating state and a cold-start operating state by means of the open-loop and/or closed-loop control device (11),
- wherein in the nominal operating state, the valve device (7) is not moved to the closed position and in the cold-start operating state, the bypass valve device (9) is not moved to the closed position.

8. Fuel cell system according to claim 7,
**characterized in that**
in the cold-start operating state, the valve device (7) is moved to the closed position.

9. Fuel cell system according to claim 7 or 8,
**characterized in that**
in the cold-start operating state, the bypass valve device (7) is not moved to the closed position.

10. Fuel cell system according to any of claims 7 to 9,
**characterized in that**
in the nominal operating state, the bypass valve device (7) is moved to the closed position.

11. Motor vehicle comprising a fuel cell system according to any of the preceding claims.

12. Method for operating a fuel cell system according to any of claims 7 to 10,
according to which the fuel cell system is switched to the cold-start operating state after being put into operation and is switched over from the cold-start operating state to the nominal operating state at a later time.

## Revendications

1. Système à piles à combustible (1) pour un véhicule automobile,
- comportant une machine à expansion (2) présentant un côté haute pression (3a) et un côté basse pression (3b), et permettant d'effectuer un travail mécanique,
- comportant plusieurs piles à combustible (4) empilées les unes sur les autres qui communiquent de manière fluidique avec le côté haute pression de la machine à expansion (2) par l'intermédiaire d'un circuit de gaz (5) de sorte que, lors du fonctionnement du système à piles à combustible (1), des gaz d'échappement contenant de l'eau et expulsés par les piles à combustible (4) dans le circuit de gaz (5) entraînent la machine à expansion (2),
- comportant un séparateur d'eau (6) disposé dans le circuit de gaz (5) et permettant de séparer l'eau des gaz d'échappement,
- comportant un dispositif à soupape (7) disposé entre le séparateur d'eau (6) et le côté haute pression (3a) de la machine à expansion (2) et permettant de régler une quantité de gaz d'échappement à acheminer vers la machine à expansion (2),
- comportant un circuit de gaz de dérivation (8) pouvant être traversé en écoulement par les gaz d'échappement et qui bifurque du circuit de gaz (5) entre les piles à combustible (4) et le séparateur d'eau (6) et au moyen duquel les gaz d'échappement passent devant la machine à expansion (2),
- comportant un dispositif à soupape de dérivation (9) disposé dans le circuit de gaz de dérivation (8) et permettant de régler la quantité de gaz d'échappement s'écoulant à travers le circuit de gaz de dérivation (8).

2. Système à piles à combustible selon la revendication 1,
**caractérisé en ce que**
la machine à expansion (2) est une turbine à gaz (10).

3. Système à piles à combustible selon la revendication 1 ou 2,
**caractérisé en ce que**
le dispositif à soupape (7) disposé dans le circuit de gaz (5) est ou comprend une soupape de régulation de pression.

4. Système à piles à combustible selon l'une des revendications 1 à 3,
**caractérisé en ce que**
le dispositif à soupape de dérivation (9) disposé dans le circuit de gaz de dérivation (8) est ou comprend une soupape de régulation de pression.

5. Système à piles à combustible selon l'une des revendications précédentes,
**caractérisé en ce que**
le dispositif à soupape (7) et le dispositif à soupape de dérivation (9) sont conçus comme des pièces identiques.

6. Système à piles à combustible selon l'une des revendications précédentes,
**caractérisé en ce que**
le système à piles à combustible (1) comprend un dispositif de commande/régulation (11) au moyen duquel le dispositif à soupape (7) et le dispositif à soupape de dérivation (9) peuvent être réglés respectivement entre une position ouverte, dans laquelle le dispositif à soupape peut être traversé en écoulement par les gaz d'échappement, et une position fermée, dans laquelle l'écoulement traversant des gaz d'échappement est empêché.

7. Système à piles à combustible selon la revendication 6,
**caractérisé en ce que**
- le système à piles à combustible (1) peut être commuté, au moyen du dispositif de commande/régulation (11), entre un état de fonctionnement nominal et un état de fonctionnement à démarrage à froid,
- dans lequel le dispositif à soupape (7) n'est pas réglé en position fermée à l'état de fonctionnement nominal et le dispositif à soupape de dérivation (9) n'est pas réglé en position fermée à l'état de fonctionnement à démarrage à froid.

8. Système à piles à combustible selon la revendication 7,
**caractérisé en ce que**
le dispositif à soupape (7) est réglé en position fermée à l'état de fonctionnement à démarrage à froid.

9. Système à piles à combustible selon la revendication 7 ou 8,
**caractérisé en ce que**
le dispositif à soupape de dérivation (7) n'est pas réglé en position fermée à l'état de fonctionnement à démarrage à froid.

10. Système à piles à combustible selon l'une des revendications 7 à 9,
**caractérisé en ce que**
le dispositif à soupape de dérivation (7) est réglé en position fermée à l'état de fonctionnement nominal.

11. Véhicule automobile comportant un système à piles à combustible selon l'une des revendications précédentes.

12. Procédé permettant de faire fonctionner un système à piles à combustible selon l'une des revendications 7 à 10,
selon lequel le système à piles à combustible est commuté à l'état de fonctionnement à démarrage à froid après la mise en service, puis est commuté un instant plus tard pour passer de l'état de fonctionnement à démarrage à froid à l'état de fonctionnement nominal.
